# EUROPEAN PATENT APPLICATION

(11) **EP 3 477 077 A1**
(43) Date of publication of application: **01.05.2019**
(21) Application number: 17198060.0
(22) Date of filing: 24.10.2017
(51) Int. Cl.: F02C 6/16, F02C 7/143

(54) **COMBINED SUBCOOLING TEMPERATURE SCAES AND SOLAR POWERED ABSORPTION CHILLER**

(71) Applicant: Aarhus Universitet, 8000 Aarhus C (DK)
(72) Inventor: Arabkoohsar, Ahmad, 5612 AH Eindhoven (NL); Bruun Andresen, Gorm, 8700 Horsens (DK)
(74) Representative: Plougmann Vingtoft a/s

(57) **Abstract**

The present invention relates to Subcooled Compressed Air Energy Storage System (SCAES) for producing compressed air and process cooling, in which surplus of electricity is converted into compressed air that is then expanded to produce process cooling and electricity.

## Description

### FIELD OF THE INVENTION

The present invention relates to Subcooled Compressed Air Energy Storage System (SCAES) for producing compressed air and process cooling, in which surplus of electricity is converted into compressed air that is then expanded to produce process cooling and electricity.

### BACKGROUND OF THE INVENTION

According to several scientific reports, there is a sharp increase in cooling demand of buildings, in particular in Europe. In addition, other studies show that the global warming phenomenon has affected the potential of passive cooling.
It appears more and more relevant that development of district cooling (DC) has significant benefits as it provides better comfort in areas with large cooling demands, and it can increase the integration between electricity, heating and cooling sectors.

It should be also considered that the importance of electricity storage solutions is increasing everyday as the awareness about the importance of the utilization of intermittent renewable energy increases. Energy storage technologies receive very high attention due to their potential in load balancing of the electricity grid as well as storing of the surplus power during low cost electricity production periods for later use in peak consumption times.

Hence, there is the need for an improved system able to produce process cooling, which is able to compensate for electricity production and consumption peaks at the same time, i.e. able to store or convert electrical energy in period of high electricity production and to produce process cooling and electricity when required or needed.

Compressed air energy storage (CAES) is one of the promising energy storage technologies that is being given much attention as it offers a very high energy density, low cost of capital, high response time to the load change and competitive energy efficiency.
Compressed air energy storage technology has received attention over the last years due to the advantages that it offers relative to other power storage technologies. There are various configurations of compressed air energy storage system for storage and production of power.

However, current CAES solutions have a very low degree of integration with district cooling and cannot co-produce process cooling and electricity.

Hence, an improved CAES system for producing process cooling by storing electricity surplus into compressed air and, when needed, converting the compressed air in process cooling and electricity, would be advantageous.

### OBJECT OF THE INVENTION

An object of the present invention is to provide a system and a method to operate a system capable of efficiently storing surplus of electricity production for later use.

An object of the present invention may be seen as a system and method to operate a system capable of delivering cooled air and producing electricity at the same time.

In particular, it may be seen as a further object of the present invention to provide a system and a method to operate a system, which solves the above mentioned problems of the prior art by storing electricity surplus into compressed air and, when needed, converting the compressed air in process cooling and electricity.

An object of the present invention is to provide an alternative to the prior art.

### SUMMARY OF THE INVENTION

Thus, the above described object and several other objects are intended to be obtained in a first aspect of the invention by providing a Subcooled Compressed Air Energy Storage System (SCAES) for producing compressed air and process cooling, the SCAES comprising: a multistage compressors, suitable for, when in operation, compressing air upon feeding of electrical energy; the multistage compressors adapted to reduce a temperature of compressed air in between stages by heat exchanger means; a reservoir for the compressed air connected to the multistage compressors; at least one mean for expanding the compressed air connected to the reservoir.

The invention relates to a system for energy conversion of surplus of electricity, such as electricity produced by sun and wind, into cooling.
For example, wind turbines produce surplus power during the night, as the load on the power grid is low. This energy can be stored using the present invention in a SCAES system through multistage compressors, such as a multistage compressor train.
The compressed air is then stored in a reservoir, such as a pressure reservoir for later use, e.g. during daytime.

Compression of air through the multistage compressors generates a lot of heat. The multistage compressors of the invention is adapted to reduce a temperature of compressed air in between compression stages by using heat exchangers which transfer the heat to another system, thus cooling the compressed air.

The multistage compressors may comprise heat exchangers that remove waste heat in the air compressor, thus cooling the air, e.g. mechanical devices such as intercoolers.
The heat exchangers may be designed for co-generation of process heat.

When it is needed, during the day, when the load on the power grid is high and cooling is needed, the compressed air is released through at least one mean for expanding the compressed air, which is connected to the reservoir.

The at least one mean for expanding the compressed air may be a turbine.

Air expansion through the turbine produces electricity that can be re-introduced to the power grid as ancillary service. At the same time waste heat from the turbine can be used to provide cooling using a heat exchanger, generating process cooling, e.g. to be delivered as district cooling.
In that the at least one mean for expanding the compressed air connected to said reservoir will co-produce electricity and process cooling, when in operation.

The term subcooling refers to a liquid existing at a temperature below its normal boiling point. For example, water boils at 373 K; at room temperature (300 K) the water is termed "subcooled".
In that, the SCAES is an energy storage system making use of compressed air at a temperature below its boiling point.

Thus, the idea of the invention is to provide a system, i. e. the SCAES, able to store electrical energy as compressed air and employ the compressed air so as to produce electricity and process cooling.

The at least one mean for expanding the compressed air may be an expander. For example the at least one mean for expanding the compressed air may be a piston type, turbine type, vane type, screw type or scroll type expander.

In some embodiments, the expander is a low temperature turbine type expander.

In some embodiments, the expander is a single screw expander.
A single screw expander is a rotary displacement expander with one rotor and two gate rotors having good adiabatic efficiency.

The at least one mean for expanding the compressed air may have an adiabatic efficiency above 65%.

The at least one mean for expanding the compressed air may have an adiabatic efficiency around 65%, such as between 50% and 70%, for example between 55% and 65%, such as 60%.

Depending on the pressure drop through each stage of the expander, the temperature drop may change. In turn, the pressure drop level depends on the number of expander stages.
For example, assuming a total of three stages, the temperature drop may be between 80 and 90 K.
The air reaches a final temperature suitable for refrigeration or air-conditioning purposes when expanded through the at least one mean for expanding the compressed air.
Typically temperatures are about -20 °C for refrigeration and below 5 °C for air-conditioning purposes.

### Absorption Chiller

In a second aspect the invention relates to an air-cooling system comprising: the SCAES according to the first aspect on the invention and an absorption chiller adapted to employ the heat exchanged at the heat exchanger means.

The absorption chiller is adapted to employ the process heat collected by the heat exchangers connected to the multistage compressors.

While in operation, the multistage compressors generate large amount of heat. This heat is transferred to the absorption chiller system of the invention via heat exchangers and it is used to produce and provide cool air.

An absorption chiller is a device that mitigates the dependence on electricity and reduces environmental impact caused by greenhouse gases and it is also capable of easily taking advantage of waste energies and renewable resources.

In some embodiments, the absorption chiller is powered by a solar energy conversion system.

The energy conversion system may thus comprises: one or more solar thermal collectors, a solar storage reservoir for storing solar heated working fluid and one or more heat exchangers.

The solar storage reservoir may be connected to the one or more solar thermal collectors and to the one or more heat exchangers.

Supplying the heating demand of the absorption chillers connected to district heating systems is challenging during summertime when there is not enough demand to take advantage of the high temperature discharge water of the chillers. Thus according to some embodiments of the invention, a new configuration of a solar assisted absorption chiller is proposed by which the heating demand of the chiller is efficiently supplied.

The new configuration of a solar powered absorption chiller is proposed by which the heating demand of the chiller decreases considerably in the summer.
The new configuration aims at the generation of cooling.

According to some embodiments, the system comprises a solar collector system heating water during the day. The heat in the water can be transferred to the before mentioned absorption chiller and used to produce cooling. During the day where the load on the power grid is high, the compressed air in the pressure reservoir is used to run a turbine and in this way provide ancillary service to the power grid. The waste heat from the turbine can be used to provide cooling using a heat exchanger and this cooling can supplement the cooling provided by the absorption chiller.
Thus, the invention relates to a SCAES that can operate in combination with an absorption chiller, such as a solar powered absorption chiller for producing cold air.

The system can thus produce cooling for large-scale applications as well as for providing ancillary services to the power grid, e.g. facilitating wind power integration. In operation, the SCAES provides cooling when the system is discharged. In the charging mode, waste heat from the compressors is directed to the single stage absorption chiller to boost its cooling power. The chiller could also be supported by district heating as it requires a considerable amount of heat at a uniform temperature of around 90 °C. In a similar manner heat from the SCAES and/or the solar thermal collector could support the district heating supply as well. In charging mode, the SCAES employs a multistage compressor that utilizes the surplus power from, e.g. wind turbines, to produce compressed air. The compressed air is kept in a pressurized reservoir, e.g. steel tanks or an underground cavern. The temperature of outlet air from each stage of compressors is hot, thus by employing heat exchangers this heat can be transferred to the generator of the absorption chiller. As the temperature of the compressed air is sufficiently high, it can easily provide the required heat of the generator of the absorption chiller and no auxiliary heat would be required for deriving the device.
In discharging mode, the pressurized air is reclaimed and expanded through one or more means for expanding air that are capable of working at very low temperatures. Thus, the compressed air stream does not need to be heated up before entering the turbines in such a system. As the compressors are in standby state in this mode, no heat is supplied to the absorption chiller by the compressors/heat exchangers connect to the compressors during discharge. Instead the cooling power of the outgoing air stream from the last stage of air expansion is used to provide cooling by means of a heat exchanger. This either decreases the cooling duty of the absorption chiller or boosts the maximum cooling capacity of the combined system.
Either district heating or solar thermal collectors may also support the absorption chiller. The advantage of using solar energy is that it coincides with degree day related cooling demands.
This configuration is a pure renewable energy based system and uses no fossil fuel, presents a very high coefficient of performance compared to other cooling systems and also produces both power and cooling which makes a unique system.

Thus, in a third aspect the invention relates to a method of operating the SCAES according to the first aspect of the invention, the method comprising: charging the SCAES; discharging the SCAES.

The step of charging may comprise: feeding electricity to the multistage compressors, thereby producing compressed air; storing the compressed air in the reservoir.

When electricity and cold air has to be produced, feeding of electricity is interrupted.

The step of discharging may comprise: releasing the compressed air onto the at least one mean for expanding the compressed air, thereby producing electricity and cold air.

In a fourth aspect, the invention relates to a method of operating the air cooling system according to the second aspect of the invention, the method comprising: charging the SCAES, thereby producing compressed air and cold fluid through the absorption chiller; discharging the SCAES, thereby producing electricity and cold air through compressed air expansion through the at least one mean for expanding the compressed air.

In a further aspect the invention relates to a method for utilizing the SCAES according to the first aspect of the invention as a continuous source of process cooling, electricity or process heating or any combinations of these.

The first, second and other aspects and embodiments of the present invention may each be combined with any of the other aspects and embodiments. These and other aspects of the invention will be apparent from and elucidated with reference to the embodiments described hereinafter.

### BRIEF DESCRIPTION OF THE FIGURES

The systems and methods according to the invention will now be described in more detail with regard to the accompanying figures. The figures show one way of implementing the present invention and is not to be construed as being limiting to other possible embodiments falling within the scope of the attached claim set.
Figure 1 is a schematic diagram of the SCAES according to some embodiments of the invention.
Figure 2 is a flow-chart of a method according to some embodiments of the invention.

### DETAILED DESCRIPTION OF AN EMBODIMENT

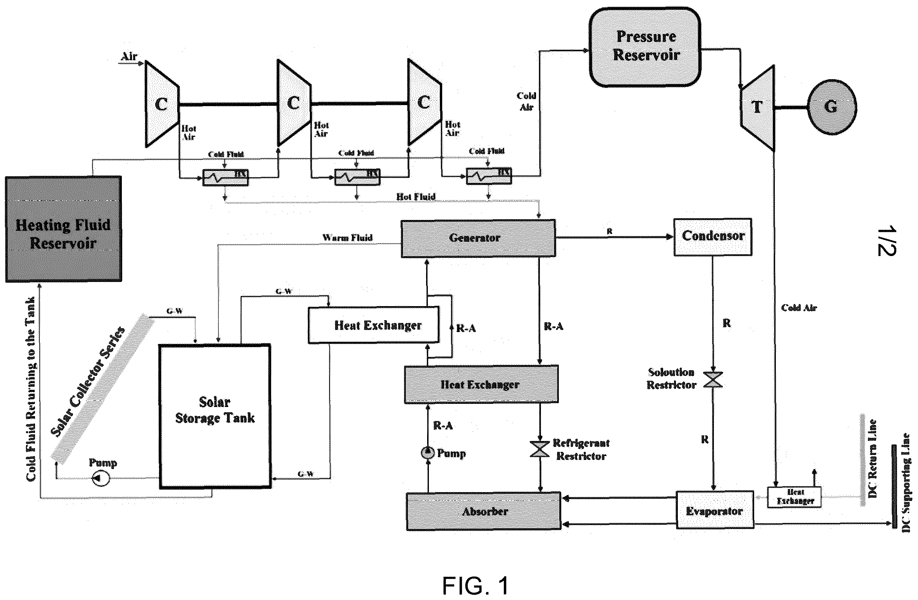

Figure 1 is a schematic diagram of the SCAES according to some embodiments of the invention.
Fig. 1 illustrates the schematic diagram of the proposed SCAES technology. Like all other energy storage systems, there may be two operation states for the systems, i.e. charging and discharging.
In this system, in charging mode, compressors (C) start working when there is surplus of electric power available. During the compression process, the airflow temperature increases. Thus, heat exchangers (HX) are employed collecting the heat produced after the compression. After exchanging heat with a cold fluid, the cold compressed air is stored in the air storage reservoir (Pressure reservoir).

The produced hot fluid can be employed in the proposed absorption chiller as shown in figure 1, e.g. a single effect LiBr-water absorption chiller. According to the figure, a single effect solar assisted absorption chiller is driven by the hot fluid produced by the heat exchangers (HX).

In discharging mode, the compressed air is reclaimed to be expanded through at least one mean for expanding air, e.g. air expanders. Being expanded through the turbine (T), rotational work is produced to run electricity generator. However, unlike other state of the art configurations, in this system the airflow is not heated before the expansion. In this way, although the power-to-power efficiency of the system decreases, no surplus heat is required for preheating process and more importantly, massive amount of cooling may be produced after the airflow expansion. The cooling produced in this phase can be gathered by employing a heat exchanger to be stored for later use of cooling applications or can be delivered to district cooling. Therefore, with such a configuration the SCAES system can be used for cooling production in charging mode and for cogeneration of cooling and power in discharging mode.

Multistage compressor and turbine are used in the system to increase the efficiency of the system in the compression and expansion processes. The number of stages may be defined based on techno-economic trade off. As the number of stages increases, the efficiency of the system will increase where the cost picks up as well. A triple stage compression is herein proposed as an example. In some embodiments, one or more stage of compression as well as one or more stage expansion can be used.
The pressure of the compressed air in the pressure reservoir may be in the area between 80 and 140 bar.

The SCAES system is characterized by expanders allowing for very low temperature cooling of air during expansion, e.g. single screw air expanders.
In some embodiments, optimal cooling may be achieved by multistage expansion. Arrangement of compressors and expanders may be in series or in parallel and may be changed during the charging and/or discharged process.

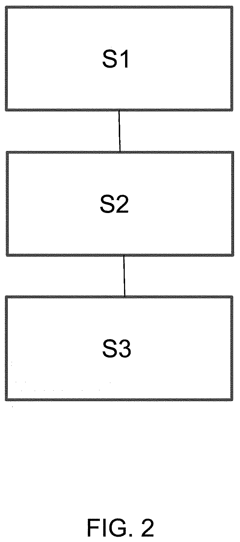

Figure 2 is a flow-chart of a method according to some embodiments of the invention.

Figure 2 shows a method of operating the air cooling system according to the second aspect of the invention, the method comprising:
S1) charging the SCAES by feeding electricity to the multistage compressors, thereby producing compressed air and cold fluid through the absorption chiller;
S2) storing the compressed air in the reservoir;
S3) releasing the compressed air onto the at least one mean for expanding the compressed air, thereby producing electricity and cold air.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A Subcooled Compressed Air Energy Storage System (SCAES) for producing compressed air and process cooling, said SCAES comprising:
- multistage compressors, suitable for, when in operation, compressing air upon feeding of electrical energy; said multistage compressors adapted to reduce a temperature of compressed air in between stages by heat exchanger means;
- a reservoir for said compressed air connected to said multistage compressors;
- at least one mean for expanding said compressed air connected to said reservoir.

2. A SCAES according to claim 1, wherein said at least one mean for expanding said compressed air is an expander.

3. A SCAES according to claim 2, wherein said expander is a low temperature turbine type expander.

4. A SCAES according to any of the claims 2-3, wherein said expander is a single screw expander.

5. A SCAES according to any of the claims 2-4, wherein said at least one mean for expanding said compressed air has an adiabatic efficiency above 65%.

6. An air-cooling system comprising:
- said SCAES according to any of the preceding claims;
- an absorption chiller adapted to employ said heat exchanged at said heat exchanger means.

7. An air cooling system according to claim 6, wherein said absorption chiller is powered by a solar energy conversion system.

8. An air cooling system according to claim 7, wherein said energy conversion system comprises:
- one or more solar thermal collectors;
- a solar storage reservoir for storing solar heated working fluid; and
- one or more heat exchangers;
wherein said solar storage reservoir is connected to said one or more solar thermal collectors and said one or more heat exchangers.

9. A method of operating said SCAES according to any of the preceding claims 2-5, said method comprising:
- charging said SCAES;
- discharging said SCAES.

10. A method according to claim 9, wherein said charging comprises:
- feeding electricity to said multistage compressors, thereby producing compressed air;
- storing said compressed air in said reservoir.

11. A method according to any of the claims 9 and 10, wherein said discharging comprises:
- releasing said compressed air onto said at least one mean for expanding said compressed air, thereby producing electricity and cold air.

12. A method of operating said air cooling system according to any of the preceding claims 9-11, said method comprising
- charging said SCAES, thereby producing compressed air and cold fluid through said absorption chiller;
- discharging said SCAES, thereby producing electricity and cold air through compressed air expansion through said at least one mean for expanding said compressed air.
